# Europäisches Patentamt
## European Patent Office
## Office européen des brevets

(11) Publication number: **0 048 176**
**B1**

(12) # EUROPEAN PATENT SPECIFICATION

(45) Date of publication of patent specification: **20.02.85**

(51) Int. Cl.⁴: **H 02 G 3/04, F 16 L 11/11**

(21) Application number: **81304260.3**

(22) Date of filing: **16.09.81**

(54) Electrically shielded conduit and method of making same.

(30) Priority: **16.09.80 US 187663**

(43) Date of publication of application:
**24.03.82 Bulletin 82/12**

(45) Publication of the grant of the patent:
**20.02.85 Bulletin 85/08**

(84) Designated Contracting States:
**AT BE CH DE FR IT LI NL SE**

(56) References cited:
**DE-B-1 088 295**
**FR-A- 765 506**
**FR-A-1 034 413**
**FR-A-2 148 843**
**FR-E- 61 785**

(73) Proprietor: **RAYCHEM CORPORATION**
**300 Constitution Drive**
**Menlo Park California 94025 (US)**

(72) Inventor: **Maul, Frederick Edward**
**3145 Ensalmo Avenue**
**San Jose California, 95118 (US)**

(74) Representative: **Dlugosz, Anthony Charles et al**
**Raychem Limited Intellectual Property Law**
**Department Faraday Road**
**Dorcan Swindon Wiltshire (GB)**

Courier Press, Leamington Spa, England.

## Description

This invention relates to conduits for electrical wires and cables.

For many years there has been a need in the industry for a lightweight, highly flexible and crush resistant electrically shielded conduit. In response to that need various solutions have been proposed. For example, United States Patent 3,466,210 discloses a method of heat shrinking fibrous material (including electrical shielding material) around the outside of a tubular member or conduit. Others have also attempted to solve the need by similarly wrapping electrically shielded braid over one conduit and sandwiching it with another layer of larger size conduit. For example, one product presently on the market, manufactured by Icore of Sunnyvale, California, comprises a first spiraled or convoluted conduit tubing wrapped with electrical shielding braid, and sandwiched by a second spirally convoluted conduit tubing of larger cross-section which is force fitted over the braid and first conduit. The Icore structure is quite heavy and loses some of its flexibility as a result of the two layers of conduit tubing.

Others have similarly wrapped the outside surface of the conduit tubing with overlapping layers of electrical shielding, e.g. United States Patents 3,467,761, 3,651,244. The overlapping layers of electrical shielding cause the shielding layer to have an irregular shape resulting in possible undesirable hoop effects.

Likewise, US—Patent 3651244 above discloses a shielding tape wrapped over the outside of a conduit. It is presumed that such a conduit does not lose a great deal of its flexibility. However, when one considers the hoop effects of such wrapped tape and the irregular shielding layer resulting therefrom, the disclosed structure may not be useful in a variety of situations.

Relatively recently, the art of inflexible type shielding conduits has significantly advanced as shown, for example, in United States Patent Nos. 3,946,143 and 4,016,356 which disclose methods of making shielding cable using heat shrinkable technology. It will be noticed that in essence one conduit is again wrapped around the outside of another larger diameter conduit sandwiching the electrical braid between the two conduits.

The present invention provides an electrically shielding conduit, which comprises a flexible conduit tube having a flexible electrical shield disposed within the tube and in contact therewith, and hollow flexible generally tubular retaining means that will expand radially when contracted axially, which retaining means is arranged to urge the shield against the conduit tube and retain it in contact therewith.

In one preferred form of conduit according to the invention, the retaining means is resilient and has a preset diameter that is sufficiently great to cause the retaining means to urge the shield against the tube. In another form of the tube, the retaining means is operatively interconnected with the tube, for example it is bonded to the tube, so as to maintain the retaining means in an axially contracted and radially expanded state. In yet another form of the tube, the retaining means a shield are formed integrally as a composite layer having an unrestrained external cross-section of at least the internal cross-section of the tube so that it urges itself against the tube.

The conduit according to the invention has the advantage that it may be formed as a very lightweight and flexible construction and, because the shield is continuously urged against the conduit tube, will remain open and define an unobstructed passageway therethrough, even upon severe bending of the conduit.

This conduit may be formed by:

providing flexible conduit tube, electrical shield and radially expansible axially compressible retaining means;

radially expanding the retaining means on a mandrel and heat setting the retaining means to an expanded cross-section;

axially expanding the retaining means so that it radially contracts;

positioning the electrical shield over the retaining means and holding the retaining means in place on the mandrel; and

maintaining the position of the electrical shield around the retaining means on the mandrel and simultaneously positioning the conduit tube over the electrical shield.

The conduit may then be cut to the appropriate length if desired.

Several embodiments of the invention will now be described by way of example with reference to the accompanying drawings in which:

Figure 1 is a partially cut away side elevation of the flexible shielding conduit in accordance with the present invention;

Figure 2 is a transverse cross-sectional view of the shielding conduit shown in Figure 1.

Figure 3 is a longitudinal section through the conduit shown in Figure 1 mounted on a mandrel.

Figure 4 is a partially cur away side elevation of another form of the electrically conduit in accordance with the present invention, and

Figures 5 and 6 are transverse cross-sectional views of further forms of conduit in accordance with the invention.

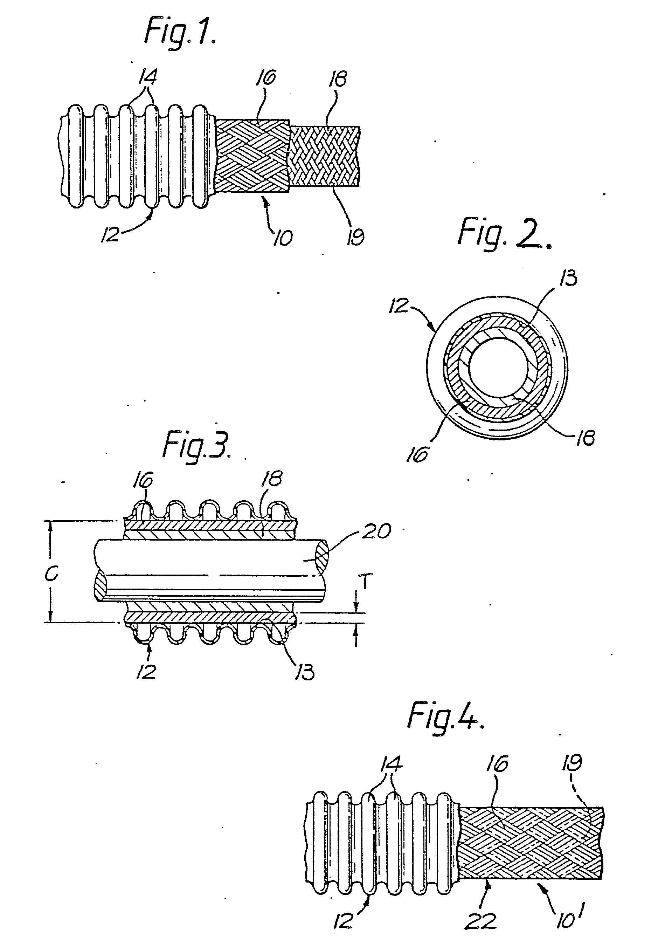

Referring initially to figures 1 to 3 of the accompanying drawings a flexible electrically shielding conduit 10 comprises a flexible conduit tube 12 having an internal diameter C, an electrical shield 16 and retaining means 18 for urging the shield 16 against the tube 12.

In accordance with the purposes and objects of the present invention the conduit tubing should be of flexible nature, and therefore has a convoluted wall in the form of annular corrugations 14. It is of course possible to use conduit tubing having helical convolutions or straight wall tubing having no convolutions, but desirably being of a flexible nature.

One form of tubing that is particularly suitable for use as the conduit tubing is that sold by Raychem Corporation under the trade name "CONVOLEX". This tubing is a lightweight, highly flexible conduit tubing having high abrasion resistance, and, furthermore, is highly crush resistant and has a wide range of operating temperatures, e.g. from −55°C to 155°C. This tubing can be bent, flexed, deformed and even completely crushed and still return to its original shape.

The electrical shield 16 comprises electrical conductive filaments woven or braided together in known manner. The shielding is disposed within the tube 12 and in contact therewith as shown in Figure 2. The shield may have a range of thickness T, and, as will be appreciated, the thicker the shield (the greater the value T), the less the flexibility will be of the shield for any given material. It will further be appreciated that the electrical shield need not be braided or woven as is described above but may simply be deformable so that it conforms to the shape of the conduit.

The conduit 10 in accordance with the embodiment shown in Figures 1 to 3 includes separate retaining means 18 disposed within the electrical shield 16, for urging the shield 16 into contact with the inner wall 13 of the tube along the length thereof. The retaining means 18 comprises at least one filament 19 and preferably includes a plurality of such filaments woven together as shown. The retaining means 18 expands radially upon being compressed axially and similarly contracts radially upon being expanded axially.

The retaining means is disposed inside the shield 16 in an axially compressed and radially expanded condition forcing the shield 16 against the tube 12 and fixed in that condition. The retaining means may be fixed in the radially expanded condition by operatively interconnecting the tube and retaining means. For example, the retaining means may be operatively interconnected with the tube by attachment of terminal connector ends to the ends of the tubing and retaining means, respectively. Alternatively, the tube may be bonded to the retaining means either directly at the ends of the retaining means and tube respectively, or along the length thereof to maintain the retaining means in axial contraction and radial expansion. In either embodiment, the adhesive that is used to fix the tube to the retaining means may be a curable adhesive for example a heat-curable adhesive. The retaining means may instead be connected to the tubing by spot fusing, either indirectly through the shielding means or directly at the ends of the tubing and retaining means, respectively.

The preferred mode of fixing the retaining means in the axially compressed radially expanded condition inside the shield is by presetting the retaining means at a predetermined diameter, radially compressing the retaining means and inserting it inside the shielding. In this mode the filaments 19 are preferably made of a polyester material. The retaining means may be placed on a mandrel, radially expanded, and heated, thereby presetting the retaining means at the predetermined diameter. When removed from the mandrel, the retaining means is thus preset and will return to its normalized cross-section. If a deforming force, such as bending, is imparted to the retaining means it will spring back in an elastic manner to its preset diameter.

The retaining means is used for keeping the conduit passageway unobstructed, thereby allowing electrical wiring or the like to be efficiently threaded therethrough.

The retaining means 18 may be made from filaments 19 which are combined such that the overall structure defining the retaining means urges the shield 16 against the inner wall 13 of the tube 12 even upon deformation of the shielded conduit, e.g. bending or crushing of the conduit. The use of polyester braid, and especially a braid sold by Bentley Harris under the trade name "EXPANDO" has been found to be particularly useful as the retaining means. This braid is a lightweight polyester braid having a highly abrasion resistant surface, comes in variable external diameter ranges and is highly flexible. In addition the "EXPANDO" braid may be preset by heating as described above, to an expanded external diameter. As will be appreciated, the radially outward urging of the "EXPANDO" braid provides the conduit with an obstruction free path even after severe deformation, thereby allowing threading of electrical wiring through the conduit with maximum efficiency even though the conduit may have been crushed during shipment or while in storage.

The retaining means 18 may be pulled over a mandrel 20 as shown in figure 3 and expanded radially. Heat may then be applied to the retaining means 18 to heat set it to a predetermined expanded external diameter. The external diameter of the retaining means should be at least equal to the internal diameter C of the tube 12 to ensure that the retaining means continuously exerts a radial force against the shield, urging it into contact with the inner wall 13 of the tubing 12 over its entire length as illustrated in Figure 3.

It will be appreciated that the cross-section of the conduit need not be circular as shown in the figures, but could for example be in the form of a flat coaxial cable.

After the retaining means 18 has been heated to preset its external diameter, it is expanded axially, thereby reducing its diameter to accommodate the overlaying of the electrical shield 16 and tubing 12. Once the shield 16 and the tubing 12 have been slipped over the mandrel and retaining means, the conduit may be cut to the desired size. Terminal ends, (not shown), such as terminal connectors or adaptors may be soldered, welded or otherwise attached to the ends of the conduit.

Thus, it will be seen that the conduit has a passageway which remains unobstructed even when the conduit is subjected to severe deforming forces such as bending, crushing or the like. Furthermore, it will be seen that the conduit remains obstruction free against severe deforming forces even whe the shield is of a non-elastic nature since the retaining means continuously urges the shielding radially outwardly against the tubing inner walls.

While it is preferable that the conduit tubing be insulated for mechanical and electrical protection, it will be appreciated that in certain cases the objects of the invention may be accomplished without such insulation.

Figure 4 shows another form of the electrically shielded conduit 10′ in accordance with this invention in which an integral inner layer 22 is disposed within the conduit tube 12. The inner layer performs both the function of an electrical shield and retaining means for urging it into contact with the inner wall 13 of the tube.

In one variation of this embodiment, the integral inner layer is a combination weave of electrically conductive filaments and retaining filaments 19. In one example of the combination weave variation, the first five filaments included in the inner layer are electrically conductive filaments, (similar to the filaments comprising the electrical shield 16), and every sixth filament of the weave is a filament similar to that of retaining means 18. In this example, the integral inner layer is identical to the shielding means 16 of the embodiment shown in Figures 1 to 3, except that every sixth filament is made from a material similar to that of filament 19 of the earlier embodiment. Of course, it will be understood that the ratio of the numbers of conducting filaments to filaments providing the retaining means may be varied widely depending on the shielding and retaining properties desired, for example every other filament or every 100th filament or the like, may be made from a material similar to that of filament 19.

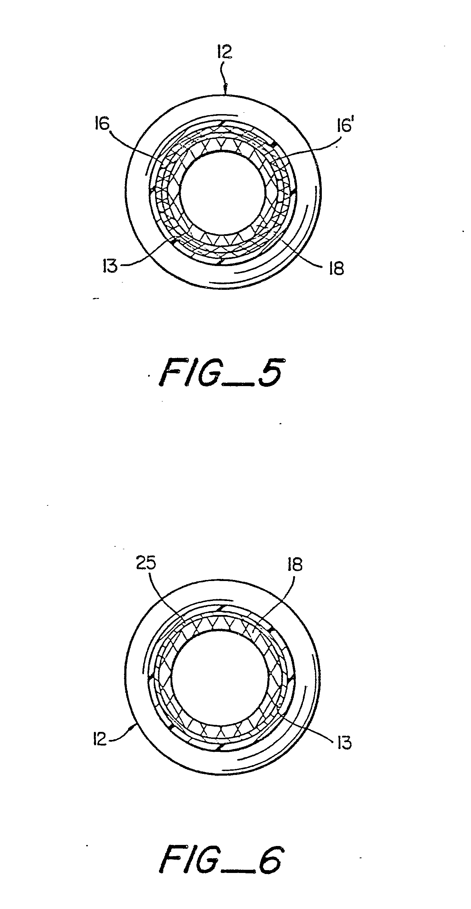

One variation of the form of conduit shown in figures 1 to 3 is shown in figure 5 and comprises a conduit tube 12, and retaining means 18 as described above but has two shield layers 16 and 16′. More shield layers may be provided depending on the user's shielding requirements.

A variation of the embodiment shown in figure 4 is shown in figure 6. In this variation, the integral inner layer may comprise retaining means similar to that described with reference to figures 1 to 3, sprayed with a metal coating. In this variation, the coating may be of any particular thickness depending upon desired shielding and retaining properties. The metal coating provides the shielding properties while the retaining means 18 continues to function as previously described as long as the coating does not become too thick.

The embodiments shown in figures 5 and 6 provide an electrical shielding conduit having an even lighter weight and greater flexibility than the embodiment shown in Figures 1 to 3. However, where the shield and retaining means are formed either as a composite weave or as a metal coat, the effective shielding possible with currently used materials will be substantially lessened. In the case of the composite weave where, for example, every sixth filament provides the retaining means, the shielding will be less because the shield cannot be as tightly woven as that shown in Figures 1 to 3. In the case where a metal coat is sprayed on the retaining means, the coat must be sufficiently thin to enable the inner layer to retain its elasticity. If a reduced shielding effect is tolerable, the embodiment shown in figure 6 is particularly desirable since it is of even lighter weight and greater flexibility than the embodiment shown in Figures 1 to 3.

## Claims

1. An electrically shielding conduit, which comprises a flexible conduit tube (12) having a flexible electrical shield (16) disposed within the tube and in contact therewith, and a hollow flexible generally tubular retaining means (18) which retains the shield (16) in contact with the conduit tube (12), characterised in that the retaining means expands radially when contracted axially, so that the retaining means (18) urges the shield (16) against the conduit tube (12).

2. A conduit as claimed in claim 1, wherein the retaining means (18) is resilient and has a preset diameter that is sufficiently great to cause the retaining means (18) to urge the shield (16) against the tube (12).

3. A conduit as claimed in claim 2, wherein the preset diameter is at least as great as the internal diameter of the conduit tube (12).

4. A conduit as claimed in claim 1, wherein the retaining means (18) is operatively interconnected with the tube (12) so as to maintain the retaining means (18) in an axially contracted and radially expanded state.

5. A conduit as claimed in claim 4, wherein the retaining means (18) is operatively interconnected with the tube (12) by means of an adhesive.

6. A conduit as claimed in any one of claims 1 to 5, wherein the retaining means (18) comprises a plurality of woven or braided filaments.

7. A conduit as claimed in any one of claims 1 to 6, wherein the retaining means is formed integrally with the shield (Fig. 4, 6).

8. A conduit as claimed in claim 7, wherein the integral electrical shield and retaining means comprise a composite weave that includes a plurality of electrically conductive filaments and at least one elastically deformable filament, the filaments woven into a braid which is axially compressible and radially expansible (Fig. 4).

9. A conduit as claimed in claim 7, wherein the retaining means comprises a plurality of woven or braided filaments and has an unrestrained diameter at least as great as the internal diameter of the tube, the electrical shield being provided as a coating on the retaining means (Fig. 6).

10. A conduit as claimed in any one of claims 1 to 8, wherein the electrical shield comprises a plurality of layers (16, 16′) (Fig. 5).

11. A conduit as claimed in any one of claims 1 to 10, wherein the conduit tube is electrically insulated.

12. A method of making flexible shielding conduit as claimed in any one of claims 1—10 which comprises the steps of:

providing flexible conduit tube, electrical shield and radially expansible axially compressible retaining means;

radially expanding the retaining means on a mandrel and heat setting the retaining means to an expanded cross-section;

axially expanding the retaining means so that it radially contracts;

positioning the electrical shield over the retaining means and holding the retaining means in place on the mandrel; and

maintaining the position of the electrical shield around the retaining means on the mandrel and simultaneously positioning the conduit tube over the electrical shield.

## Revendications

1. Une conduite électriquement blindée qui comprend un tube de conduite flexible (12) présentant un blindage électrique flexible (16) monté dans le tube, en contact avec ce dernier, un moyen de retenue généralement tubulaire, flexible, creux (18) qui maintient le blindage (16) en contact avec le tube (12) de la conduite, caractérisée en ce que ledit moyen de retenue est expansible radialement quand il est contracté axialement, de telle sorte qu'il pousse le blindage (16) contre le tube (12) de la conduite.

2. Une conduite selon la revendication 1, dans laquelle le moyen de retenue (18) est élastique et présente un diamètre pré-réglé qui est suffisamment grand pour que le moyen de retenue (18) pousse le blindage (16) contre le tube (12).

3. Une conduite selon la revendication 2, dans laquelle le diamètre pré-réglé est au moins aussi grand que le diamètre interne du tube de la conduite (12).

4. Une conduite selon la revendication 1, dans laquelle le moyen de retenue (18) est interconnecté opérationnellement avec le tube (12) de manière à maintenir le moyen de retenue (18) dans une condition expansée radialement et contractée axialement.

5. Une conduite selon la revendication 4, dans laquelle le moyen de retenue (18) est interconnecté fonctionnellement avec le tube (12) par l'intermédiaire d'un adhésif.

6. Une conduite selon l'une quelconque des revendications 1 à 5, caractérisée en ce que les moyens de retenue (18) comprennent plusieurs filaments tissés ou tressés.

7. Une conduite selon l'une quelconque des revendications 1 à 6, dans laquelle le moyen de retenue est formé d'une seule pièce avec le blindage (fig. 4, 6).

8. Une conduite selon la revendication 7, dans laquelle le blindage électrique et le moyen de retenue d'une seule pièce comportent un tissage composite formé de plusieurs filaments électriquement conducteurs et au moins un filament déformable élastiquement, les filaments étant tissés à l'intérieur d'une tresse qui est compressible axialement et expansible radialement (fig. 4).

9. Une conduite selon la revendication 7, dans laquelle le moyen de retenue comporte plusieurs filaments tissés ou tressés et présente un diamètre non diminué, au moins aussi grand que le diamètre interne du tube, le blindage électrique se présentant comme un garnissage ménagé sur le moyen de retenue (fig. 6).

10. Une conduite selon l'une quelconque des revendications 1 à 8, dans laquelle le blindage électrique comprend plusieurs couches (16—16') (fig. 5).

11. Une conduite selon l'une quelconque des revendications 1 à 10, dans laquelle le tube de la conduite est isolé électriquement.

12. Un procédé de fabrication d'une conduite électriquement blindée, selon l'une quelconque des revendications 1 à 10, qui consiste essentiellement:

— à prévoir un tube de conduite flexible, un blindage électrique et un moyen de retenue expansible radialement et compressible axialement;

— à dilater radialement le moyen de retenue sur un mandrin et à le régler à chaud, à une section transversale expansée;

— à dilater axialement le moyen de retenue de telle sorte qu'il se contracte radialement;

— à mettre en place le blindage électrique sur le moyen de retenue et à maintenir ce dernier en place sur le mandrin; et

— à maintenir en position le blindage électrique autour au moyen de retenue sur le mandrin et à mettre en place simultanément le tube de la conduite sur le blindage électrique.

## Patentansprüche

1. Elektrisch abgeschirmte Leitung, die ein flexibles Leitungsrohr (12), das eine flexible elektrische Abschirmung (16) hat, die in dem Rohr angeordnet und in Kontakt mit demselben ist, und eine Hohle, flexible, im allgemeinen rohrförmige Halteeinrichtung (18) aufweist, die die Abschirmung (16) in Kontakt mit der Rohrleitung (12) hält, dadurch gekennzeichnet, daß die Halteeinrichtung sich in radialer Richtung expandiert, wenn sie in axialer Richtung zusammengedrückt wird, so daß die Halteeinrichtung (18) die Abschirmung (16) gegen das Leitungsrohr (12) drückt.

2. Leitung nach Anspruch 1, dadurch gekennzeichnet, daß die Halteeinrichtung (18) federnd nachgiebig ist und einen vorwählbaren Durchmesser hat, der ausreichend größer ist, um zu erreichen, daß die Halteeinrichtung (18) die Abschirmung (16) gegen das Rohr (12) drückt.

3. Leitung nach Anspruch 2, dadurch gekennzeichnet, daß der vorwählbare Durchmesser wenigstens so groß wie der Innendurchmesser des Leitungsrohres (12) ist.

4. Leitung nach Anspruch 1, dadurch gekennzeichnet, daß die Halteeinrichtung (18) funktionsmäßig mit dem Rohr (12) so verbunden ist, daß die Halteeinrichtung (18) in einem axial zusammengezogenen und radial expandierten Zustand gehalten ist.

5. Leitung nach Anspruch 4, dadurch gekennzeichnet, daß die Halteeinrichtung (18) funktionsmäßig mit dem Rohr (12) mit Hilfe eines Klebers verknüpft ist.

6. Leitung nach einem der Ansprüche 1 bis 5, dadurch gekennzeichnet, daß die Halteeinrichtung (18) eine Mehrzahl von· gewobenen oder geflochtenen Filamenten aufweist.

7. Leitung nach einem der Ansprüche 1 bis 6, dadurch gekennzeichnet, daß die Halteeinrichtung einstückig mit der Abschirmung ausgebildet ist (Figur 4, 6).

8. Leitung nach Anspruch 7, dadurch gekennzeichnet, daß die einstückige elektrische Abschirmung und die Halteeinrichtung ein zusammengesetztes gewobenes Material aufweisen, das eine Mehrzahl von elektrisch leitenden Filamenten und wenigstens ein elastisch verformbares Filament enthält, und daß die Filamente zu einem Geflecht gewoben sind, das axial zusammendrückbar und radial expandierbar ist (Figur 4).

9. Leitung nach Anspruch 7, dadurch gekennzeichnet, daß die Halteeinrichtung eine Mehrzahl von gewobenen oder geflochtenen Filamenten aufweist und daß sie einen unbelasteten Durchmesser hat, der wenigstens gleich groß wie der Innendurchmesser des Rohres ist, und daß die elektrische Abschirmung als ein Überzug auf der Halteeinrichtung vorgesehen ist ·(Figur 6).

10. Leitung nach einem der Ansprüche 1 bis 8, dadurch gekennzeichnet, daß die elektrische Abschirmung eine Mehrzahl von Schichten (16, 16') aufweist (Figur 5).

11. Leitung nach einem der Ansprüche 1 bis 10, dadurch gekennzeichnet, daß das Leitungsrohr elektrisch isoliert ist.

12. Verfahren zur Herstellung einer flexiblen abgeschirmten Leitung nach einem der Ansprüche 1 bis 10, gekennzeichnet durch die Schritte:

Vorsehen eines flexiblen Leitungsrohres, einer elektrischen Abschirmung und einer radial expandierbaren, axial komprimierbaren Halteeinrichtung,

radiales Expandieren der Halteeinrichtung auf einem Dorn und Wärmefixieren der Halteeinrichtung unter Einhaltung eines expandierten Querschnitts,

axiales Expandieren der Halteeinrichtung, so daß sie sich in radialer Richtung zusammenzieht,

Anbringen der elektrischen Abschirmung über der Halteeinrichtung und Halten der Halteeinrichtung an Ort und Stelle auf dem Dorn, und

Beibehalten der Position der elektrischen Abschirmung um die Halteeinrichtung auf dem Dorn und gleichzeitiges Anordnen des Leitungsrohres auf der elektrischen Abschirmung.

Fig.1.

Fig. 2.

Fig.3.

Fig.4.

FIG_5

FIG_6